(19) Europäisches Patentamt
European Patent Office
Office européen des brevets

(11)  EP 2 869 710 B1

(12)  **EUROPEAN PATENT SPECIFICATION**

(45) Date of publication and mention
of the grant of the patent:
**18.05.2016  Bulletin 2016/20**

(51) Int Cl.:
***A23D 7/01*** *(2006.01)*      ***A23D 9/013*** *(2006.01)*
***A23D 9/05*** *(2006.01)*

(21) Application number: **13727622.6**

(22) Date of filing: **10.06.2013**

(86) International application number:
**PCT/EP2013/061884**

(87) International publication number:
**WO 2014/005797 (09.01.2014 Gazette 2014/02)**

(54) **FAT POWDER AND PROCESS FOR THE PREPARATION OF EDIBLE WATER-IN-OIL EMULSION COMPRISING IT**

FETTPULVER UND VERFAHREN ZUR HERSTELLUNG VON ESSBAREN WASSER-IN-ÖL-EMULSIONEN

POUDRE GRASSE ET PROCÉDÉ DE PRÉPARATION D'ÉMULSIONS EAU DANS LE HUILE COMESTIBLES L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **06.07.2012  EP 12175298**

(43) Date of publication of application:
**13.05.2015  Bulletin 2015/20**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **ADEL, DEN, Rudi**
**NL-3133 AT Vlaardingen (NL)**
• **ARENDS, Berend, Jan**
**NL-3133 AT Vlaardingen (NL)**
• **JANSSEN, Johannes, Jozef, Maria**
**NL-3133 AT Vlaardingen (NL)**
• **MAN, DE, Teunis**
**NL-3133 AT Vlaardingen (NL)**
• **SANTOS RIBEIRO, Henelyta**
**NL-3133 AT Vlaardingen (NL)**

(74) Representative: **Wurfbain, Gilles L.**
**Unilever N.V.**
**Unilever Patent Group**
**Olivier van Noortlaan 120**
**3133 AT Vlaardingen (NL)**

(56) References cited:
**WO-A1-2004/017747      WO-A1-2010/069751
WO-A1-2010/069753      US-B1- 6 764 707**

**Description**

**Field of invention**

The present invention relates to a fat powder comprising hardstock fat co-crystallized with at least one emulsifier. The invention further relates to a process using said fat powder to manufacture water-in-oil emulsions and to the manufactured water-in-oil emulsions.

**Background of invention**

Edible water-in-oil emulsions (W/O emulsions) like e.g. margarine and low fat spreads are well known food products that comprise a continuous fat-phase and a dispersed water-phase.

Margarine is generally defined as a composition containing at least 80 wt. % of fat and about 20 wt. % of a water-phase. In contrast, emulsions containing less than 80 wt. % of fat are generally called spreads. Nowadays the terms margarine and spread are often used interchangeably although in some countries the commercial use of the term margarine is subject to certain regulatory requirements. The main difference between margarine and spread is the amount of fat. For the purpose of the present invention the terms margarine and spread are used interchangeably.

The fat-phase of margarine and similar edible W/O emulsions comprises a mixture of liquid oil (i.e. fat that is liquid at ambient temperature) and fat which is solid at ambient temperature. The liquid oil fraction typically comprises liquid unmodified vegetable oil such as soybean oil, sunflower oil, linseed oil, low erucic rapeseed oil (Canola), corn oil (maize oil) and blends of vegetable oils. The solid fat, also called structuring fat or hardstock fat, serves to structure the fat-phase by forming a fat crystal network throughout the continuous oil-phase. It also helps to stabilize the emulsion. The droplets of the water-phase are fixed within the spaces of the lattice of solid fat crystals. This prevents coalescence of the droplets and separation of the heavier water-phase from the fat-phase.

For an edible water-in-oil emulsion, ideally the structuring fat has such properties that it melts or dissolves at in-mouth conditions, otherwise the product may have a heavy and/or waxy mouthfeel. An important indicator is the temperature at which a water-in-oil emulsion breaks up. Preferably the water-in-oil emulsion breaks up at in-mouth conditions to provide a good oral response. Furthermore, the overall organoleptic impression should be smooth and preferable no perceivable grains should be present upon ingestion as this may result in what is generally known as a 'sandy', 'grainy' and/or 'lumpy' mouthfeel.

Triacylglycerols (TAGs), also known as triglycerides, are the major constituents of natural fats and oils and are esters of glycerol and fatty acids. The chemical structure of the fatty acid and the distribution of the fatty acids over the glycerol backbone determine (at least partly) the physical properties of a fat. The physical properties of fats, like for example the solid fat content (SFC) expressed as N-value, can be modified by altering the chemical structure of the fat. Well known techniques that are widely used include hydrogenation and interesterification.

Hydrogenation alters the degree of unsaturation of the fatty acids and as such alters the fatty acid composition. This allows e. g. plastic fats to be made from liquid oils. A drawback of hydrogenation, especially of partial hydrogenation, is the formation of by-products like e. g. trans fatty acids. Furthermore additional process steps are required and some consumers perceive a chemical process such as hydrogenation as undesirable.

Interesterification retains the fatty acid composition but alters the distribution of the fatty acids on the glycerol backbones. Interesterification can be done chemically or with the aid of enzymes. Usually a mixture of two different fats, that by themselves are not or less suitable as a structuring fat, is subjected to interesterification. The resulting interesterified fat will have improved structuring properties compared to the starting materials. A drawback of interesterification may be the formation of by-products like e. g. free fatty acids and diglycerides. Also enzymatic interesterification introduces additional process steps which may be complicated and introduce additional costs. Furthermore some consumers perceive chemically modified fats as unnatural and therefore undesirable.

Water-in-oil emulsions are typically made by either the votator or churn process; or by a process which involves the use of fat powder comprising hardstock fat.

The general process for the manufacture of emulsions via the votator or churn process encompasses the following steps:

　　1. Mixing of the liquid oil, the hardstock fat and if present the water-phase at a temperature at which the hardstock fat is definitely liquid;
　　2. cooling of the mixture under high shear to induce crystallization of the hardstock fat to create an emulsion;
　　3. formation of a fat crystal network to stabilize the resulting emulsion and give the product some degree of firmness;
　　4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

The general process for the manufacture of emulsions by use of fat powder comprising hardstock fat (i.e. pre-crystallized fat) encompasses the following steps:

a. mixing of fat powder and liquid oil to provide a slurry;
b. providing a water-phase;
c. mixing the slurry and the water-phase to form a fat-continuous emulsion,

wherein the fat-powder is typically not subjected to a temperature at which the fat powder will substantially melt.

A commonly used type of fat powder is micronized fat powder, which is for example obtainable by a Super Critical Melt Micronisation process, as described in J. of Supercritical Fluids 43 (2007) 181-190 and EP1651338.

One of the benefits of the use of fat powder for emulsions, in comparison with the votator or churn process is a reduction in energy requirement, a broader range of fat suitable as hardstock fat and that it allows a reduction in Saturated Fatty Acid contents (SAFA).

Typically fat soluble emulsifiers are used in the manufacture of W/O emulsions as they aid the forming of a fat crystal network and help to stabilize the emulsion (e.g. prevent coalescence of the dispersed water-phase droplets).

Fat soluble emulsifiers can be added during a process to manufacture W/O emulsions using fat powder in various ways. For example, the emulsifier can be added to the liquid oil, the water-phase (typically by first dissolving the emulsifier in a small amount of liquid oil) and/or by co-crystallizing the emulsifier with the hardstock comprised by the fat powder. WO2010/069753 discloses and compares the effect of addition of the emulsifier in each of these ways. Addition of the emulsifier to the water-phase was shown to lead to a small droplet-size, as measured in D3,3. However, it was found that when the emulsifier is added to the water-phase, phase-separation can occur, leading to the emulsifier being in-homogeneously distributed throughout the water-phase. This can be particularly problematic for factory scale processes where typically the water-phase is prepared separately from the fat-phase, before being mixed to form a W/O emulsion.

Important quality-aspects of an edible water-in-oil emulsion are for example hardness, spreadibility and stability (e.g. storage stability and the ability to withstand temperature cycling). Temperature cycling means that the product is subjected to low and high temperatures (e.g. when the consumer takes the product out of the refrigerator and leaves it for some time at the table prior to use). An inadequate stability may for example lead to destabilization of the emulsion, oil-exudation and/or uncontrolled crystal growth. The stability of W/O emulsion may be assessed by measuring the D3,3 and e^sigma of the dispersed water phase. These parameters indicate the average size and size distribution of the water-phase droplets. Generally, smaller values of D3,3 and e^sigma are indicative of more stable W/O emulsions. Nowadays consumers and retailers desire W/O emulsions which are stable even when used in adverse conditions, such as on warm summer days and/or when frequently moved between a cold storage location (e.g. fridge) to the place of use (e.g. table where the product is used at room temperature).

Therefore, there is a need for W/O emulsions products which have an improved quality, preferably an improved stability.

Furthermore, there is a need for W/O emulsion products which have an improved quality, preferably an improved stability, and which comprise hardstock fats which have undergone less or no chemical modification.

Furthermore, there is a need for a process to manufacture W/O emulsion products with an improved quality, preferably an improved stability, which can be implemented on factory scale and result in a more consistent quality of the W/O emulsions produced.

**Summary of the invention**

It was found that one or more of the above objectives is achieved by use of fat powder comprising hardstock fat of a certain solid fat profile, co-crystallized with at least one selected emulsifier, in the manufacture of W/O emulsions. Specifically said solid fat profile is characterized by 90 to 40 wt. % solid fat at 10 degrees Celsius, 85 to 20 wt. % solid fat at 20 degrees Celsius and 25 to 2 wt. % solid fat at 35 degrees Celsius. Specifically, said selected emulsifier has a HLB value of 8 or lower and comprises at least 60 wt. %, based on the total weight of the emulsifier, of mono and/or diglycerides having a saturated fatty acids with a carbon chain length of at least 12.

Therefore, in a first aspect the invention relates to a fat powder comprising hardstock fat co-crystallized with at least one emulsifier,

•  wherein said emulsifier has a HLB value of B or lower and comprises at least 60 wt. %, based on the total weight of the emulsifier, of

o mono- or diglycerides or a combination thereof, having saturated fatty acids with a carbon chain length of at least 12; and

- wherein said hardstock fat is characterized by the following solid fat profile:

N10 from 90 to 40;
N20 from 85 to 20;
N35 from 25 to 2; and

wherein the weight ratio of said hardstock fat to said emulsifier is from 1:0.010 to 1:0.5, and wherein the fat powder comprises, based on the weight of total hardstock fat comprised by the fat powder, at least 75 wt. % of one or more natural fats.

It was surprisingly found that the quality of W/O emulsions, having a solid fat profile as mentioned above, could be improved by use of fat powder according to the invention. In particular, the quality was substantially improved when compared to W/O emulsions made in a process wherein fat powder was used, but wherein the emulsifier was added to the liquid oil. For example, it was found that W/O emulsions of the current invention have an substantially improved stability as measured in D3,3 and e^sigma values of the dispersed water-phase.

In contrast, little or no improvement was observed when an emulsifier was used, not according to the invention, comprising a low amount of mono-and/or diglycerides having saturated fatty acids. An example of such an emulsifier is Dimodan RT, which comprises about 20 wt. % of mono- and/or diglycerides having saturated fatty acids.

Furthermore, little or no improvement could be observed when hardstock fat was used with a solid fat profile not according to the Invention. Examples of such hardstock fats are hardstock fat consisting essentially of dry fractionated palm oil stearin or hardstock fat consisiting of an interesterified mixture of 65% dry fractionated palm oil stearin with an Iodine Value of 14 and 35% palm kernel oil.

In a second aspect the invention relates to a process for the manufacture of edible water-in-oil emulsions comprising 10 to 85 wt. % of a dispersed water-phase and 15 to 90 wt. % of total fat, said process comprising the steps of:

a. providing fat powder according to the invention:
b. providing liquid oil;
c. providing a water-phase;
d. mixing said fat powder, liquid oil and the water-phase to provide a water-in-oil emulsion,

wherein the amount of fat powder is from 1 to 50 wt. %, based on the weight of total fat.

In a third aspect the invention relates to edible water-in-oil emulsions with an improved stability, obtainable by a process according to the invention, comprising 10 to 85 wt. % of a dispersed water-phase and 15 to 90 wt % of total fat, and further comprising from 1 to 50 wt. % of fat powder, based on the weight of total fat, said fat powder comprising hardstock fat co-crystallized with at least one emulsifier, wherein said hardstock fat is characterized by the following solid fat profile:

N10 from 90 to 40;
N20 from 85 to 20;
N35 from 25 to 2;

, wherein said emulsifier has a HLB value of 8 or lower and comprises at least 60 wt. %, based on the total weight of the emulsifier, of

- mono- or diglycerides or a combination thereof, having saturated fatty acids with a carbon chain length of at least 12; and

wherein the ratio of said hardstock fat to said emulsifier is from 1:0.010 to 1:0.5
and wherein the fat powder comprises, based on the weight of total hardstock fat comprised by the fat powder, at least 75 wt % of one or more natural fat.

## Detailed description of the invention

Weight percentage (wt. %) is based on the total weight of the composition unless otherwise stated. The terms 'fat' and 'oil' are used interchangeably. Where applicable the prefix 'liquid' or 'solid' is added to indicate if the fat or oil is liquid or solid at ambient temperature as understood by the person skilled in the art. The terms 'structuring fat' and 'hardstock fat' are used interchangeably, Hardstock fat refers to a fat that is solid at ambient temperature as understood by the person skilled in the art.

Fat powder

The fat powder according to the invention comprises hardstock fat co-crystallized with at least one emulsifier. Suitable methods to induce co-crystallization include subjecting a molten mixture of the hardstock fat and emulsifier to conditions which allow fast crystallization (a.k.a.

crash cooling). Examples of suitable methods include cryo-crystallization, in which atomized liquid droplets come in contact with liquid nitrogen causing the droplets to instantaneously solidify, and supercritical melt micronisation (ScMM), also known as particles from gas saturated solutions (PGSS). ScMM is a commonly known method and is for example described in J. of Supercritical Fluids 43 (2007) 181-190 and EP1651338.

Preferably the fat powder comprising hardstock fat co-crystallized with emulsifier according to the invention is obtainable by supercritical melt micronisation (ScMM).

An example of fat powder not according to the invention is a mixture of separately crystallized hardstock fat and emulsifier (e.g. a powder of fat powder comprising crystallized hardstock fat mixed with a powder comprising crystallized emulsifier). Another example not according to the invention is fat powder comprising crystallized hardstock fat and no emulsifier.

Fat powder - SAXS measurements

Fat powders can be analyzed using SAXS (Small-Angle X-ray Scattering) measurements. SAXS measurements (SAXS) provide information about the nature of the crystallized material. In particular, SAXS may allow a skilled person to discriminate between fat powders according to the invention and fat powder, not according to the invention. The parameters FWHM (Full Width at Half Maximum) and D-value are parameters which can be typically derived with SAXS. These parameters can be used to monitor the crystallite thickness and the level of mixed triglyceride layering. In particular, FWHM is dependent on the amount of repeating bilayers of triglycerides which determines the thickness of a crystallite, the level of order/disorder of the triglycerides arrangement in the repeating bilayers and the triglyceride composition of the hardstock.

It was observed that a fat powder, according to the invention, comprising hardstock fat co-crystallized with emulsifier may show an increased FWHM when compared to fat powder of the same composition, wherein the crystallized hardstock fat is not co-crystallized with emulsifier. Said property can be expressed as a Quotient-C:

$$Quotient\text{-}C = \frac{FWHM\text{-}A}{FWHM\text{-}B}$$

Wherein FWHM-A is the FWHM of the fat powder comprising hardstock fat co-crystallized with emulsifier, and wherein FWHM-B is the fat powder comprising crystallized hardstock fat, not co-crystallized with emulsifier.

One example of fat powder not comprising co-crystallized hardstock fat and emulsifier are mixtures of separately crystallized hardstock fat and emulsifier. Another example is fat powder comprising crystallized hardstock fat with no added emulsifier.

Therefore, Quotient-C may be used as indication that a fat powder is a fat powder according to the invention comprising co-crystallized hardstock fat and emulsifier. For example the FWHM of a fat powder of interest (used as FWHM-A), can be measured and compared to the FWHM of fat powder comprising crystallized hardstock fat of the same fat composition but not comprising added emulsifier (used as FWHM-B). In case the fat powder of interest is a fat powder according to the invention it will typically show a Quotient-C of above 1.

Preferably a fat powder according to the invention has a Quotient-C above 1, preferably of at least 1.15, more preferably at least 1.25, even more preferably at least 1.35 and still even more preferably at least 1.45.

Composition of the fat powder

The hardstock may help to stabilize dispersion of the water-phase in the continuous oil-phase. The crystallization and melting properties of the hardstock fat are important as they influence the stability of the edible dispersion, e.g. syneresis and plasticity, as well as the organoleptic properties, e.g. oral melting behavior and flavor release. It will be appreciated that the amount of hardstock fat necessary for imparting structure to an edible composition depends on the desired structure. For a stable spread, for example, a certain amount of hardstock fat is necessary. If the amount of hardstock fat is too low, a stable W/O emulsion may not be obtained and the resulting emulsion may not comprise the typical plasticity of a spread.

The hardstock fat may be a single fat or a mixture of different fats. The hardstock fat may be of vegetable, animal or marine origin. Preferably at least 50 wt. % of the hardstock fat (based on total amount of hardstock fat) is of vegetable origin, more preferably at least 60 wt. %, even more preferably at least 70 wt. %, still more preferably at least 80 wt. %, even still more preferably at least 90 wt. % and even still more further preferably at least 95 wt. %. Most preferably the hardstock fat essentially consists of hardstock fat of vegetable origin.

The hardstock fat comprised by the fat powder may be sourced from any suitable oil or fat. Preferred oils and fats are those known for the production of margarine and margarine derivatives such as low fat spreads. The oil and fat are for example selected from the group comprising sunflower oil, rapeseed oil, palm oil, coconut oil, soy bean oil, palm kernel oil, butter fat or a combination thereof. Preferably the liquid oil is selected from the group consisting of sunflower oil, rapeseed oil, soybean oil, linseed oil, maize oil and combinations thereof. Preferably the hardstock fat is selected from the group consisting of palm oil, palm kernel oil, coconut oil and combinations thereof.

It will be appreciated that the hardstock fat comprised by the fat powder should adhere to the N-line specifications of this invention. The N-lines value of fat (i.e. the solid fat content at specific temperatures), and other physical properties, can be modified by altering the chemical structure of the fat. Well known techniques that are widely used include hydrogenation and interesterification.

Hydrogenation alters the degree of unsaturation of the fatty acids and as such alters the fatty acid composition. This allows e.g. plastic fats to be made from liquid oils. A drawback of especially partial hydrogenation is the formation of by products like e.g. trans fatty acids. Interesterification retains the fatty acid composition but alters the distribution of the fatty acids over the glycerol backbones. Interesterification can be done chemically or with the aid of enzymes. Usually a mixture of two different fats, that by themselves are not or less suitable as a structuring fat, is subjected to interesterification. The resulting interesterified fat will have improved structuring properties compared to the starting materials. A drawback of interesterification may be the formation of by products like e.g. free fatty acids and diglycerides. Also enzymatic interesterification introduces additional process steps which may be complicated and introduce additional costs. Furthermore some consumers perceive chemically modified fats as unnatural and therefore undesirable.

By co-crystallizing hardstock fat with emulsifier, some (mixtures of) natural fats which otherwise would not lead to stable W/O emulsions, may become suitable as hardstock fat to manufacture stable W/O emulsions.

The hardstock fat comprised by the fat powder comprises, based on the weight of total hardstock fat comprised by the fat powder, at least 75 wt. %, even more preferably 95 wt. % of one or more natural fats; and still even more preferably essentially consists of one or more natural fats. For the purpose of this invention, fats which have undergone interesterification and/or hydrogenation are not considered natural fats.

It is important that the fat powder is not subjected to temperatures at which the hardstock fat substantially melts as this may severely reduces the ability of the structuring fat to stabilize the edible dispersion. The temperature at which the hardstock fat melts depends on the hardstock fat as used and can routinely be determined for example based on the solid fat content profile (i.e. N-lines) of the hardstock fat. Preferably the fat powder, after production, has not been subjected to temperatures above 25 degrees Celsius, more preferably 20 degrees Celsius, even more preferably 15 degrees Celsius and still even more preferably 10 degrees Celsius.

Preferably the hardstock fat comprised by the edible fat powder is characterized by the following solid fat content:

N10 from 80 to 50;
N20 from 60 to 25;
N35 from 15 to 3;
even more preferably the hardstock fat is characterized by the following solid fat profile: N10 from 75 to 55;
N20 from 45 to 28;
N35 from 10 to 4.

Preferably the hardstock fat comprised by the fat powder essentially consists of a mixture of from 25 to 55 wt. % dry fractionated palm oil stearin and 45 to 75 wt. % palm kernel oil. Preferably the fat powder according to the invention comprises at least 60 wt. %, more preferably at least 75 wt. %, even more preferably at least 90 wt. %, still more preferably at least 95 wt. % and even still more preferably at least 98 wt. % of said co-crystallized mixture of hardstock fat and emulsifier according to the invention, based on the total weight of the fat powder.

Emulsifiers

Fat soluble emulsifiers are commonly used in the preparation of water-in-oil emulsions, such as spreads, to improve stabilization. Likewise, water soluble emulsifiers are used in the preparation of oil-in-water emulsion, like for example dressings, as these emulsifiers stabilize oil-in-water emulsions. The Hydrophilic-Lipophilic Balance (HLB) of an emulsifier is a measure of the degree to which it is hydrophilic or lipophilic. The HLB value is a parameter which is describing the solubility of the surfactant. The HLB value is a concept introduced by Griffin in 1950 as a measure of the hydrophilicity or lipophilicity of nonionic surfactants. It can be determined experimentally by the phenol titration method of Marszall; see "Parfumerie, Kosmetik", Vol. 60, 1979, pp. 444-448; and Rompp, Chemistry Lexicon, 8th Edition 1983, p. 1750. An emulsifier having an HLB value of 8 or lower is usually classified as being a water-in-oil promoting emulsifier and as fat soluble. Emulsifiers with an HLB of more than 8 are oil-in-water promoting.

Besides hardstock fat, the fat powder according to the invention comprises at least one emulsifier co-crystallized with the hardstock fat, wherein said emulsifier has a HLB value of 8 or lower and comprises at least 60 wt. %, based on the total weight of the emulsifier, of mono- and/or diglycerides, having saturated fatty acids with a carbon chain length of at least 12.

To determine the wt. % of diglycerides having saturated fatty acids with a carbon chain length of at least 12, only the diglycerides wherein both saturated fatty acids have a carbon chain length of at least 12 are considered. For example, in case the emulsifier comprises:

- 22 wt. % of diglycerides having two C16:0 acids;
- 35 wt. % of mono-glyceride having a C18:0 acid; and
- 50 wt. % of diglycerides having one C12:0 acid and one C18:1 acid;

the total wt. % of mono- and/or diglycerides having saturated fatty acids with a carbon chain length of at least 12 is 57 wt. %.

The emulsifier comprises at least 60 wt. %, more preferably at least 70 wt. %, even more preferably at least 80 wt. % and still even more preferably at least 85 wt. % of mono- or diglycerides or a combination thereof, having saturated fatty acids with a carbon chain length of at least 12.

Still even more preferably the emulsifier essentially consists of molecularly distilled mono- and/or diglyceride mixture derived from fully hardened palm oil, comprising from 85 to 95 wt. % mono-glyceride.

The mono-and/or diglycerides comprised by the emulsifier according to the invention preferably have saturated fatty acids with a carbon chain length of at least 14, even more preferably of at least 16 and still even more preferably of at least 18. For example to determine the wt. % of diglycerides having saturated fatty acids with a carbon chain length of at least 18, only the diglycerides wherein both saturated fatty acids have a carbon chain length of at least 18 are considered.

The emulsifier according to the invention may comprise mono-glycerides and diglycerides in any combination but preferably the weight ratio of mono-glyceride to diglyceride is at least 1 to 10 (e.g. 2 to 10), more preferably at least 1 to 1, even more preferably at least 10 to 1 and still even more preferably at least 100 to 1.

Preferably the emulsifier comprises at most 40 wt.%, more preferably at most 30 wt. %, even more preferably at most 20 wt. % and still even more preferably at most 15 wt. % of mono- and/or diglycerides having an unsaturated fatty acid. To determine the weight contribution of diglycerides having an unsaturated fatty acid, the weight of diglycerides having at least one unsaturated fatty acid is considered.

Preferably the weight ratio of hardstock fat to emulsifier as co-crystallized and comprised by the fat powder is from 1:0.015 to 1:0.4, more preferably is from 1:0.05 to 1:0.25, even more preferably is from 1:0.075 to 1:0.2 and still even more preferably is from 1:0.08 to 1:0.12.

The fat powder according to the invention, besides hardstock fat and emulsifier, may comprise additional components like for example liquid oil. It will be appreciated that care must be taken to prevent the properties of the fat powder to be detrimentally affected. For example, the presence of liquid oil may affect the ability to form a powder (e.g. may result in a sticky powder or no recognizable powder), depending on the natural fats and the liquid oil as well as the amounts thereof. It is within the reach of the skilled person to determine without undue burden how much of the additional components may be present using common general knowledge.

As the purpose of the fat powder is to provide structure to the W/O emulsions it may be preferred not to include too many and/or too much of additional components that do not primarily add to the structuring ability of the fat powder, like for example protein and carbohydrates. Preferably the fat powder comprises not more than 20 wt. % of protein and/or carbohydrates, more preferably not more than 15 wt. %, even more preferably not more than 10 wt. %, and still more preferably not more than 5 wt. %. Most preferably no protein and carbohydrates are present.

As the presence of water may complicate the production of edible fat powders according to the invention it is preferred that the amount of water is not more than 20 wt. %, preferably not more than 10 wt. % and more preferably not more than 5 wt. %. Most preferably no water is present.

Process to manufacture W/O emulsions

The process to manufacture W/O emulsions, according to the invention, uses at least the following ingredients:

fat powder according to the invention, liquid oil and a water-phase.

Water-phase

The water-phase is prepared according to the standard way in accordance with the chosen ingredients. The water-phase of the emulsion may suitably contain a variety of food grade ingredients, such as sodium chloride, acidulant, preservative, water-soluble flavoring, polysaccharides, minerals and water-soluble vitamins. The water-phase may also comprise liquid oil, for example to aid the inclusion of hydrophobic ingredients in the water-phase. The water-phase may also comprise proteins and non-gelling proteins, like for example dairy proteins. The water-phase may also comprise gelling and/or thickening agents like for example starches, vegetable gums, pectin and proteins suitable for such use like gelatine.

Liquid oil

The liquid oil used in the process according to the invention may be a single oil or a mixture of oils, and may comprise other components. Preferably at least 50 wt. % of the oil (based on total amount of oil) is of vegetable origin, more preferably at least 60 wt. %, even more preferably at least 70 wt. %, even more preferably at least 80 wt. %, even more preferably at least 90 wt. % and even more preferably at least 95 wt. %. Still even more preferably the oil essentially consists of oil of vegetable origin. The liquid oil preferably comprises unmodified vegetable oil such as soybean oil, sunflower oil, linseed oil, low erucic rapeseed oil (Canola), corn oil (maize oil), olive oil, algae oil and blends of vegetable oils. For the purpose of this invention algae oils are considered vegetable oils.

Process to provide W/O emulsion

The process, according to the invention, for manufacturing edible water-in-oil emulsions comprising 10 to 85 wt. % of a dispersed water-phase and 15 to 90 wt. % of total fat, comprises the steps of:

a. providing fat powder according to the invention;
b. providing liquid oil;
c. providing a water-phase;
d. mixing said fat powder, liquid oil and the water-phase to provide a water-in-oil emulsion,

wherein the amount of fat powder is from 1 to 50 wt. %, based on the weight of total fat.
Preferably the amount of fat powder, according to the invention, used in the process according to the invention, based on the weight of total fat, is from 1 to 35 wt. %, preferably from 3 to 25 wt. %, more preferably from 5 to 20 wt. % and even more preferably from 7 to 15 wt. %

Mixing

The ingredients provided at step 'a', 'b' and 'c' may be mixed in any order. The ingredients may be mixed whole or in (several) parts. It will be appreciated that the ingredients provided at step 'a', 'b' and 'c' are ultimately mixed together to provide a W/O emulsion at step 'd'.
For example, all or part of the fat powder and liquid oil can be mixed to provide an oil-slurry. Subsequently, the water-phase and any remaining parts of the fat powder and the liquid oil can be mixed to provide a W/O emulsion at step 'd'.
The process according to the invention has the added benefit of producing W/O emulsion products of more consisting quality, for example when implemented on factory scale.
In factory scale processes, typically the water-phase is prepared separately from the fat-phase, before being mixed to form a W/O emulsion. A benefit of said separate preparation is that the water-phase can be kept (e.g. stored) at an elevated temperature with a reduced risk of for example microbial contamination. Furthermore, the risk of pre-mature gellation of any gelling systems dissolved in the water-phase can be avoided.
It was found that when the emulsifier is added to the water-phase, phase-separation can occur, leading to the emulsifier being in-homogeneously distributed throughout the water-phase. For example, part of the emulsifier may be found floating atop the water-phase. A substantial part of the W/O emulsions produced from such a water-phase may have either too little or too much emulsifier and be of poor quality, such as have a poor stability. It will be appreciated that said phase separation occurs more frequently in factory scale processes in which large volumes of water-phase may be prepared and/or may be kept (e.g. stored) for extended periods before being mixed with the fat-phase. When manufacturing W/O emulsion according to the invention it was found that fewer products suffered from either too little or too much emulsifier when for example compared to a process, not according to the invention, wherein the emulsifier is added to the water-phase. Therefore, use of the process according to the invention allows a more consistent quality of W/O emulsions produced.

It is important that during the process according to the invention the fat powder is not subjected to temperatures at which the hardstock fat comprised by the fat powder substantially melts as this severely reduces the ability of the fat powder to structure. This temperature depends on the hardstock fat comprised by the fat powder and can routinely be determined for example based on the solid fat content profile (i.e. N-lines) of the hardstock fat used. Preferably the fat powder, after production, has not been subjected to temperatures at which a substantial part of the fat powder melts and more preferably has not been subjected to above 25 degrees Celsius, more preferably above 20 degrees Celsius, even more preferably above 15 degrees Celsius and still even more preferably 10 degrees Celsius. For example, care must be taken that hot ingredients are not brought into contact with the fat powder in such a way as to melt a substantial part of the fat powder. Thus depending on the temperature of the ingredients and the specific N-lines of the fat powder used, cooling can be applied.

Mixing may be done by suitable mixers, such as those known in the field of W/O emulsion making (e.g. spreads making).

Edible water-in-oil emulsion

W/O emulsions of the invention, are edible water-in-oil emulsions, obtainable by a process according to the invention, comprising 10 to 85 wt. % of a dispersed water-phase and 15 to 90 wt. % of total fat, and further comprising from 1 to 50 wt. %, based on the weight of total fat, of hardstock fat with the following solid fat profile:

N10 from 90 to 40;
N20 from 85 to 20;
N35 from 25 to 2;

and further comprising at least one emulsifier with a HLB value of 8 or lower, wherein said emulsifier comprises at least 40 wt. %, based on the total weight of the emulsifier, of

- mono- or diglycerides or a combination thereof, having saturated fatty acids with a carbon chain length of at least 12, and

wherein the ratio of said hardstock fat to said emulsifier is from 1:0.010 to 1:0.5, and wherein the fat powder comprises, based on the weight of total hardstock fat comprised by the fat powder, at least 75 wt.% of one or more natural fats.

W/O emulsions according to the invention have an improved stability compared to W/O emulsions of similar composition, but which for example were made in a process not according to the invention, wherein the emulsifier was added to the liquid oil. Although the stability will be improved (e.g. the D3,3 and/or e ^sigma will be smaller in comparison), it will be appreciated that the actual value of the D3,3 and e^sigma achieved may vary.

Preferably the W/O emulsions according to the invention have a dispersed water-phase with a D3,3 of at most 18, preferably of at most 15 and more preferably of at most 12. Preferably W/O emulsions according to the invention have a e^sigma of at most 2.3, preferably of at most 2.1 and more preferably of at most 1.9.

Preferably the weight ratio of hardstock fat to emulsifier comprised by the W/O emulsions of the invention is from 1:0.015 to 1:0.4, more preferably is from 1:0.05 to 1:0.25, even more preferably is from 1:0.075 to 1:0.2 and still even more preferably is from 1:0.08 to 1:0.12. Preferably the hardstock fat comprised by the edible W/O emulsion according to the invention is characterized by the following solid fat content:

N10 from 80 to 50;
N20 from 60 to 25;
N35 from 15 to 3;

even more preferably the hardstock fat is characterized by the following solid fat profile: N10 from 75 to 55;

N20 from 45 to 28;
N35 from 10 to 4.

Preferably the hardstock fat essentially consists of a mixture of from 25 to 55 wt. % dry fractionated palm oil stearin and 45 to 75 wt. % palm kernel oil.

Nowadays W/O emulsions which are low in fat are desired by consumers as associated with health benefits. Preferably the W/O emulsion according to the invention comprises 20 to 80 wt. %, more preferably 25 to 70 wt. %, even more preferably 30 to 60 wt. % and still even more preferably 35 to 55 wt. % of total fat.

Preferably the W/O emulsion according to the invention comprises 15 to 75 wt. %, more preferably 20 to 70 wt. %, even more preferably 25 to 65 wt. % and still even more preferably 35 to 55 wt. % of a dispersed water-phase, based on the total weight of the W/O emulsion.

It will be appreciated that the total weight % of the ingredients (e.g. the sum of the weight of the water-phase and total fat) of the W/O emulsion according to the invention will not exceed 100 wt. %.

Preferably the W/O emulsion according to the invention is a liquid margarine, a wrapper or a spread, more preferably a spread and even more preferably a low-fat spread comprising of from 10 to 40 wt. % of total fat.

The invention is now illustrated by the following non limiting examples.

**Examples**

Small-Angle X-ray scattering (SAXS)

The SAXS measurements are performed at the high-brilliance ID02 beamline of the European Synchrotron Radiation Facility (ESRF) in Grenoble, France. The incident X-ray wavelength is 0.0996 nm for all experiments. The sample to detector distance is 1.50 m, allowing collection of SAXS data in the range $0.06 < q/nm^{-1} < 4.5$, where q (= $4\pi.\sin\theta/\lambda$) is de wave vector (and $\theta$ the scattering angle). The samples are 2.0 mm thick and held in an aluminium cell with mica windows. A four position temperature stage is used to control the temperature at 10 degrees Celsius. The SAXS detector is a FReLoN (Fast-Readout, Low-Noise) Kodak CCD, based on a Kodak KAF-4320 image sensor. The two-dimensional SAXS pattern is azimuthally averaged to obtain the scattered intensity as a function of q.

The Full Width at Half Maximum (FWHM) values of the first order long spacing derived from SAXS measurements were calculated by converting q to 2-Theta using wavelength 0.15418 nm (Cu K-alpha radiation) for comparison with home lab equipment. The raw data is delivered as ascii files (q versus intensity).

For the conversion of q to D-value, the following formulas were used (where lambda is 0.15418 nm):

$$q = 4 * Pi \; Sin(Theta) / lambda$$

$$D\text{-value} = (n * lambda) / (2 * sin(Theta))$$

where n is an integer (=1 for our calculations).

$$\text{Therefore D-value} = 2 * Pi / q \; (nm)$$

For the calculation of 2-Theta for Cu K-alpha radiation (where lambda is 0.15418 nm):

$$Sin(Theta) = Lambda / (2 * D\text{-value})$$

$$2\text{-Theta} = 2 * ASIN (Lambda/(2 * D\text{-value})) * 180 / Pi$$

180/Pi is the conversion radians to degrees

$$\text{Therefore 2-Theta} = 2 * ASIN(Lambda / (2 * D\text{-value})) * 180 / Pi$$

The calculations are performed in Excel and the obtained 2-Theta versus Intensity values are copied into notepad to generate a .txt file. This file was converted to .raw file by the software FileExchange version 1.2.26 (Bruker-AXS). Subsequently this raw file was read in the EVA-software version 12 (Bruker-AXS) to calculate the FWHM and the d-value of the sample.

Solid Fat Content (SFC) measurements

The solid fat content (SFC) in this description and claims is expressed as N-value, as defined in Fette, Seifen Anstrichmittel 80 180-186 (1978). The stabilization profile applied is heating to a temperature of 80 degrees Celsius, keeping the oil for at least 10 minutes at 60 degrees Celsius or higher, keeping the oil for 1 hour at 0 degrees Celsius and then 30 minutes at the measuring temperature.

Water droplet size distribution of spreads (D3,3 measurements

The normal terminology for Nuclear Magnetic Resonance (NMR) is used throughout this method. On the basis of this method the parameters D3,3 and $\exp(\sigma)$ of a lognormal water droplet size distribution can be determined. The D3,3 is the volume weighted mean droplet diameter and $\sigma$ is the standard deviation of the logarithm of the droplet diameter.
The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the log-normal droplet size distribution - the parameters of the water droplet size distribution D3,3 (volume weighed geometric mean diameter) and $\sigma$ (a.k.a. e^sigma) (distribution width) are calculated.
A Bruker magnet with a field of 0.47 Tesla (20 MHz proton frequency) with an air gap of 25 mm is used (NMR Spectrometer Bruker Minispec MQ20 Grad, ex

Bruker Optik GmbH, DE).
The D3,3 and e^sigma of the spread is measured, according to the above described procedure, of a spread stabilized at 5 degrees Celsius right after production for one week..

Preparation of the edible fat powders

Table 1 shows the composition of the hardstock fat comprised by the fat powder in terms of solid fat profile.

Table 1, Solid fat content of the hardstock fat

| Solid fat % at | 35 wt% dfPOs / 65 wt% PK | dfPOs |
|---|---|---|
| 10 degrees Celsius | 68.5 | 80.2 |
| 20 degrees Celsius | 38.3 | 67.8 |
| 35 degrees Celsius | 5.7 | 40.6 |
| dfPOs: dry fractionated palm oil stearin PK: palm kernel oil | | |

Table 2 shows the co-crystallized mixtures comprised by the fat powders.

Table 2, Composition of fat powders

| | Hardstock fat (A) | Emulsifier (B) | Mix |
|---|---|---|---|
| Fat powder A* | 35 wt% dfPOs / 65 wt% PK | Dimodan HP | 90 wt. % A + 10 wt. % B |
| Fat powder B | 35 wt% dfPOs / 65 wt% PK | - | - |
| Fat powder C | 35 wt% dfPOs / 65 wt% PK | Dimodan RT | 90 wt. % A + 10 wt. % B |
| Fat powder D | dfPOs | Dimodan HP | 90 wt. % A + 10 wt. % B |
| Fat powder E | dfPOs | Dimodan RT | 90 wt. % A + 10 wt. % B |

(continued)

|  | Hardstock fat (A) | Emulsifier (B) | Mix |
|---|---|---|---|
| Fat powder F | dfPOs | - | - |
| *Fat powder according to the invention<br>Dimodan HP: molecularly distilled mono-/diglyceride mixture derived from fully hardened palm oil (90% mono-glyceride) ex Danisco DK.<br>Dimodan RT: molecularly distilled mono-/diglyceride mixture derived from partially hardened rapeseed oil (90% mono-glyceride) ex Danisco DK. | | | |

The fat powders were obtained using a supercritical melt micronisation process similar to the process described in 'Particle formation of ductile materials using the PGSS technology with supercritical carbon dioxide', P.Münüklü, Ph.D.Thesis, Delft University of Technology, 16-12-2005, Chapter 4, pp. 41-51.

SAXS measurements of the fat powders:

The fat powders were anaylsed by SAXS measurements (Table 3).

Table 3. Fat powder analysis by SAXS

| Sample | D-value (angstrom) | FWHM (2-Theta) | Quotient-C |
|---|---|---|---|
| Fat powder A* | 37.3 | 0.406 | 1.53 |
| Fat powder B | 37.0 | 0.265 | 1.00 |
| Fat powder C | 36.7 | 0.361 | 1.36 |
| Fat powder D | 43.1 | 0.241 | 1.19 |
| Fat powder E | 42.7 | 0.204 | 1.00 |
| Fat powder F | 42.8 | 0.203 | 1.00 |
| *Fat powder according to the invention | | | |

It was observed that a fat powder comprising a co-crystallized mixture according to the invention (Fat powder A) can be characterized by a FWHM-value which is about 112 % of the FWHM of the fat powder comprising an emulsifier not according to the invention (Dimodan RT, Fat powder C) and about 153 % of the FWHM value of a fat powder comprising no co-crystallized emulsifier (Fat powder B).

Spreads product composition

Edible spreads with a composition as in Table 4 were made according to the methods as described below.

Table 4, Spreads product formulation (wt. %).

|  | Ex-1 | C-1 | C-2 | C-3 | C-4 | C-5 | C-6 | C-7 |
|---|---|---|---|---|---|---|---|---|
| Fat-phase | | | | | | | | |
| Fat powder A | 4.68 | - | - | - | - | - | - | - |
| Fat powder B | - | 4.68 | | - | - | - | 4.68 | - |
| Fat powder C | - | - | 4.68 | -- | - | - | - | - |
| Fat powder D | - | - | - | 4.68 | | - | - | - |
| Fat powder E | - | - | - | - | 4.68 | - | - | - |
| Fat powder F | - | - | - | - | - | 4.68 | - | 4.68 |
| Dimodan HP | - | 0.468 | - | - | - | 0.468 | - | - |
| Dimodan RT | - | - | - | - | - | - | 0.468 | 0.468 |

(continued)

|  | Ex-1 | C-1 | C-2 | C-3 | C-4 | C-5 | C-6 | C-7 |
|---|---|---|---|---|---|---|---|---|
| Fat-phase |  |  |  |  |  |  |  |  |
| Sunflower oil | 34 | 34 | 34 | 34 | 34 | 34 | 34 | 34 |
| B-carotene (1.0%) | 0.07 | 0.07 | 0.07 | 0.07 | 0.07 | 0.07 | 0.07 | 0.07 |
| Water-phase |  |  |  |  |  |  |  |  |
| NaCL | 0.1 | 0.1 | 0.1 | 0.1 | 0.1 | 0.1 | 0.1 | 0.1 |
| water# | Balance | Balance | Balance | Balance | Balance | Balance | Balance | Balance |
| # The pH of the water was adjusted to 4.8 using 20% citric acid solution. | | | | | | | | |

Preparation of spreads

Cold oil and colorant are added to a stirring tank (Fryma vessel) mixed and degassed. Fat powder was added to the oil and mixed-in under vacuum. The fat powder and oil mixture is mixed under high shear, using a reflux pipe until an oil-slurry was obtained which appeared smooth and transparent. The maximum temperature increase observed due to mixing was about 20 degrees Celsius. Before being fed into the C-unit see below the temperature of the oil-slurry was about 20 degrees Celsius.

For Comparatives 1, 5, 6 and 7 a stock solution of the emulsifier was prepared by mixing the emulsifier with about 1% of the oil and heating it up to 75 degrees Celsius. The stock solution, cooled to about 70 degrees Celsius, was added to the degassed oil, with a temperature of about 14 degrees Celsius, and mixed.

The water-phase was prepared by dissolving the sodium chloride in the water and adjusting the pH to about 4.8 using 20 wt. % citric acid solution. Before being fed into the C-unit, see below, the water-phase was cooled to about 12-13 degrees Celsius.

The thus prepared oil-slurry and water-phase were fed to a C-unit (volume 75 ml) operating at a flow-rate of 15 kg per hour and at 2400 rpm. Tubs were filed and stored at 5 degrees Celsius.

Results

Spreads produced according to the processes and compositions described above were analyzed (Table 5).

Table 5. Spreads analysis

|  | D3,3 | E^sigma |
|---|---|---|
| Ex-1 | 10.8 | 1.8 |
| C-1 | 21.5 | 2.6 |
| C-2 | 11.5 | 2.1 |
| C-3 | 6.5 | 1.5 |
| C-4 | 6.6 | 1.8 |
| C-5 | 6.5 | 1.6 |
| C-6 | 7.7 | 1.8 |
| C-7 | 5.6 | 1.7 |

The results show that in W/O emulsions made according to the invention (Ex-1) the D3,3 was reduced by about 50 % compared to W/O emulsions, having a similar composition, but wherein the emulsifier was added to the liquid oil during manufacturing process (C-1). In addition, it was observed that the e^sigma of the dispersed water-phase was also improved (i.e. reduced) by about 30 %.

In contrast, in case W/O emulsions were made using an emulsifier not according to the invention (Dimodan RT), addition of the emulsifier as co-crystallized with the hardstock (C-2) lead to an increase in D3,3 of the W/O emulsions as compared to addition of the emulsifier to the liquid oil (C-6).

Furthermore, when using hardstock fat not according to the invention (substantially consisting of dfPOs), addition of the emulsifier as co-crystallized with the hardstock fat (Dimodan HP, C-3; Dimodan RT, C-4), had little or no effect on the D3,3 of the W/O emulsions compared addition of the emulsifier to the liquid oil (Dimondan HP, C-5; Dimodan RT, C-7).

Therefore, the results clearly show the benefit of co-crystallizing a hardstock fat according to the invention with at least one emulsifier with a HLB value of 8 or lower, wherein said emulsifier comprises at least 40 wt. % of mono- and/or diglycerides, based on the total weight of the emulsifier, having a saturated fatty acid with a carbon chain length of at least 12.

**Claims**

1. Fat powder comprising hardstock fat co-crystallized with at least one emulsifier,

   • wherein said emulsifier has a HLB value of 8 or lower and comprises at least 60 wt. %, based on the total weight of the emulsifier, of

      o mono- or diglycerides or a combination thereof, having saturated fatty acids with a carbon chain length of at least 12; and

   • wherein said hardstock fat is **characterized by** the following solid fat profile:

      N10 from 90 to 40;
      N20 from 85 to 20;
      N35 from 25 to 2; and

   wherein the weight ratio of said hardstock fat to said emulsifier is from 1:0.010 to 1:0.5, and wherein the fat powder comprises, based on the weight of total hardstock fat comprised by the fat powder, at least 75 wt. % of one or more natural fats.

2. Fat powder according to claim 1, comprising at least 60 wt. %, more preferably at least 75 wt. %, even more preferably at least 90 wt. %, still more preferably at least 95 wt. % and even still more preferably at least 98 wt. % of the co-crystallized hardstock and emulsifier, based on the total weight of the fat powder.

3. Fat powder according to claim 1 or claim 2, wherein the fat powder is obtainable by supercritical melt micronisation.

4. Fat powder according to any one of claims 1 to 3, wherein the weight ratio of hardstock fat to emulsifier as co-crystallized and comprised by the fat powder is from 1:0.015 to 1:0.4, preferably is from 1:0.05 to 1:0.25, more preferably is from 1:0.075 to 1:0.2 and even more Preferably is from 1:0.08 to 1:0.12.

5. Fat powder according to any one of claims 1 to 4, wherein the emulsifier comprises at least 70 wt. %, even more preferably at least 80 wt. % and still even more preferably at least 85 wt. % of mono- or diglycerides or a combination thereof, having saturated fatty acids with a carbon chain length of at least 12.

6. Fat powder according to any one of claims 1 to 5, wherein the hardstock fat is **characterised by** the following solid fat profile:

      N10 from 80 to 50;
      N20 from 60 to 25;
      N35 from 15 to 3;

   even more preferably the hardstock fat is **characterised by** the following solid fat profile:

      N10 from 75 to 55;
      N20 from 45 to 28;
      N35 from 10 to 4.

7. Fat powder according to any one of claims 1 to 6, wherein the fat powder is **characterized by** a Quotient-C of at least 1.15, more preferably at least 1.25, even more preferably at least 1.35 and still even more preferably at least 1.45.

8. Process for the manufacture of edible water-in-oil emulsions comprising 10 to 85 wt. % of a dispersed water-phase and 15 to 90 wt. % of total fat, said process comprising the steps of:

   a. providing fat powder according to any one of claims 1 to 7;
   b. providing liquid oil;
   c. providing a water-phase;
   d. mixing said fat powder, liquid oil and the water-phase to provide a water-in-oil emulsion, wherein the amount of fat powder is from 1 to 50 wt. % based on the weight of total fat.

9. Process according to claim 8, wherein the fat powder is not subjected to temperatures above 25 degrees Celsius, preferably 20 degrees Celsius, more preferably 15 degrees Celsius and still even more preferably 10 degrees Celsius.

10. Process according to claim 8 or claim 9, wherein the amount of fat powder, based on the weight of total fat, is from 1 to 35 wt. %, preferably from 3 to 25 wt. %, more preferably of from 5 to 20 wt. % and even more preferably of from 7 to 15 wt. %.

11. Edible water-in-oil emulsion, obtainable by a process according to any one of claims 8 to 10, comprising 10 to 85 wt. % of a dispersed water-phase and 15 to 90 wt. % of total fat, and further comprising from 1 to 50 wt. % of fat powder, based on the weight of total fat, said fat powder comprising hardstock fat co-crystallized with at least one emulsifier, wherein said hardstock fat is **characterized by** the following solid fat profile:

    N10 from 90 to 40;
    N20 from 85 to 20;
    N35 from 25 to 2; wherein said emulsifier has

    a HLB value of 8 or lower, wherein said emulsifier comprises at least 60 wt. %, based on the total weight of the emulsifier, of

    • mono- or diglycerides or a combination thereof, having saturated fatty acids with a carbon chain length of at least 12, and

    wherein the ratio of said hardstock fat to said emulsifier is from 1:0.010 to 1:0.5, and wherein the fat powder comprises, based on the weight of total hardstock fat comprised by the fat powder, at least 75 wt. % of one or more natural fats..

12. Edible emulsion according to claim 11, wherein the weight ratio of the hardstock fat to the emulsifier is from 1:0.015 to 1:0.4, more preferably is from 1:0.05 to 1:0.25, even more preferably is from 1:0.075 to 1:0.2 and still even more preferably is from 1:0.08 to 1:0.12.

13. Edible emulsion according to any one of claims 11 to 12, wherein the D3,3 of the dispersed water-phase is at most 18, preferably of at most 15 and more preferably of at most 12.

14. Edible emulsion, according to any one of claims 11 to 13, wherein the hardstock fat is **characterised by** the following solid fat profile:

    N10 from 80 to 50;
    N20 from 60 to 25;
    N35 from 15 to 3;

    more preferably the hardstock fat is **characterized by** the following solid fat profile:

    N10 from 75 to 55;
    N20 from 45 to 28;
    N35 from 10 to 4.

15. Edible emulsion according to any one of claims 11 to 14, wherein the emulsion is a liquid margarine, a wrapper or a spread, more preferably a spread and even more preferably a low-fat spreads comprising of 10 to 40 wt % of total fat.

**Patentansprüche**

1. Fettpulver umfassend Hardstockfett kokristallisiert mit mindestens einem Emulgator,

   • wobei der Emulgator einen HLB-Wert von 8 oder weniger aufweist und mindestens 60 Gew.-%, bezogen auf das Gesamtgewicht des Emulgators, von

   o Mono- oder Diglyceriden oder einer Kombination davon, die gesättigte Fettsäuren mit einer Kohlenstoffkettenlänge von mindestens 12 aufweisen, umfasst; und
   • wobei das Hardstockfett durch das folgende Festfettprofil gekennzeichnet ist:

   N10 von 90 bis 40;
   N20 von 85 bis 20;
   N35 von 25 bis 2; und

   wobei das Gewichtsverhältnis von dem Hardstockfett zu dem Emulgator 1:0,010 bis 1:0,5 beträgt und wobei das Fettpulver, bezogen auf das Gewicht des gesamten Hardstockfetts, das von dem Fettpulver umfasst ist, mindestens 75 Gew.-% von einem oder mehreren natürlichen Fetten umfasst.

2. Fettpulver nach Anspruch 1, umfassend mindestens 60 Gew.-%, bevorzugter mindestens 75 Gew.-%, noch bevorzugter mindestens 90 Gew.-%, noch mehr bevorzugt mindestens 95 Gew.-% und sogar noch mehr bevorzugt mindestens 98 Gew.-% von dem kokristallisierten Hardstock und Emulgator, bezogen auf das Gesamtgewicht des Fettpulvers.

3. Fettpulver nach Anspruch 1 oder Anspruch 2, wobei das Fettpulver durch überkritische Schmelzmikronisierung erhältlich ist.

4. Fettpulver nach irgendeinem der Ansprüche 1 bis 3, wobei das Gewichtsverhältnis von Hardstockfett zu Emulgator, wie kokristallisiert und von dem Fettpulver umfasst, von 1:0,015 bis 1:0,4, bevorzugt von 1:0,05 bis 1:0,25, bevorzugter von 1:0,075 bis 1:0,2 und noch mehr bevorzugt von 1:0,08 bis 1:0,12 beträgt.

5. Fettpulver nach irgendeinem der Ansprüche 1 bis 4, wobei der Emulgator mindestens 70 Gew.-%, noch bevorzugter mindestens 80 Gew.-% und noch mehr bevorzugt mindestens 85 Gew.-% von Mono- oder Diglyceriden oder einer Kombination davon, die gesättigte Fettsäuren mit einer Kohlenstoffkettenlänge von mindestens 12 aufweisen, umfasst.

6. Fettpulver nach irgendeinem der Ansprüche 1 bis 5, wobei das Hardstockfett durch das folgende Festfettprofil gekennzeichnet ist:

   N10 von 80 bis 50;
   N20 von 60 bis 25;
   N35 von 15 bis 3;

   wobei das Hardstockfett noch bevorzugter durch das folgende Festfettprofil gekennzeichnet ist:

   N10 von 75 bis 55;
   N20 von 45 bis 28;
   N35 von 10 bis 4.

7. Fettpulver nach irgendeinem der Ansprüche 1 bis 6, wobei das Fettpulver durch einen Quotient-C von mindestens 1,15, bevorzugter mindestens 1,25, noch bevorzugter mindestens 1,35 und sogar noch mehr bevorzugt mindestens 1,45 gekennzeichnet ist.

8. Verfahren zur Herstellung von essbaren Wasser-in-Öl-Emulsionen, umfassend 10 bis 85 Gew.-% einer dispergierten Wasserphase und 15 bis 90 Gew.-% Gesamtfett, wobei das Verfahren die folgenden Schritte umfasst:

   a. Bereitstellen von Fettpulver nach irgendeinem der Ansprüche 1 bis 7;
   b. Bereitstellen von flüssigem Öl;

c. Bereitstellen einer Wasserphase;

d. Mischen von dem Fettpulver, dem flüssigen Öl und der Wasserphase, um eine Wasser-in-Öl-Emulsion bereitzustellen,

wobei die Menge an Fettpulver 1 bis 50 Gew.-%, bezogen auf das Gewicht an Gesamtfett, beträgt.

9. Verfahren nach Anspruch 8, wobei das Fettpulver keinen Temperaturen über 25 Grad Celsius, bevorzugt 20 Grad Celsius, bevorzugter 15 Grad Celsius und noch mehr bevorzugt 10 Grad Celsius ausgesetzt wird.

10. Verfahren nach Anspruch 8 oder Anspruch 9, wobei die Menge an Fettpulver, bezogen auf das Gewicht an Gesamtfett, 1 bis 35 Gew.-%, bevorzugt 3 bis 25 Gew.-%, bevorzugter 5 bis 20 Gew.-% und noch mehr bevorzugt 7 bis 15 Gew.-% beträgt.

11. Essbare Wasser-in-Öl-Emulsion, erhältlich durch ein Verfahren nach irgendeinem der Ansprüche 8 bis 10, umfassend 10 bis 85 Gew.-% einer dispergierten Wasserphase und 15 bis 90 Gew.-% Gesamtfett, und ferner umfassend 1 bis 50 Gew.-% Fettpulver, bezogen auf das Gewicht an Gesamtfett, wobei das Fettpulver Hardstockfett kokristallisiert mit mindestens einem Emulgator umfasst, wobei das Hardstockfett durch das folgende Festfettprofil gekennzeichnet ist:

N10 von 90 bis 40;
N20 von 85 bis 20;
N35 von 25 bis 2; wobei der Emulgator einen HLB-Wert von 8 oder weniger aufweist, wobei der Emulgator mindestens 60 Gew.-%, bezogen auf das Gesamtgewicht des Emulgators, von

• Mono- oder Diglyceriden oder einer Kombination davon, die gesättigte Fettsäuren mit einer Kohlenstoffkettenlänge von mindestens 12 aufweisen, umfasst; und

wobei das Verhältnis von dem Hardstockfett zu dem Emulgator von 1:0,010 bis 1:0,5 beträgt und wobei das Fettpulver, bezogen auf das Gewicht des gesamten Hardstockfetts, das von dem Fettpulver umfasst ist, mindestens 75 Gew.-% von einem oder mehreren natürlichen Fetten umfasst.

12. Essbare Emulsion nach Anspruch 11, wobei das Gewichtsverhältnis von dem Hardstockfett zu dem Emulgator von 1:0,015 bis 1:0,4, bevorzugter von 1:0,05 bis 1:0,25, noch bevorzugter von 1:0,075 bis 1:0,2 und noch mehr bevorzugt von 1:0,08 bis 1:0,12 beträgt.

13. Essbare Emulsion nach irgendeinem der Ansprüche 11 bis 12, wobei der D3,3 der dispergierten Wasserphase höchstens 18, bevorzugt höchstens 15 und bevorzugter höchstens 12 ist.

14. Essbare Emulsion nach irgendeinem der Ansprüche 11 bis 13, wobei das Hardstockfett durch das folgende Festfettprofil gekennzeichnet ist:

N10 von 80 bis 50;
N20 von 60 bis 25;
N35 von 15 bis 3;
wobei das Hardstockfett bevorzugter durch das folgende Festfettprofil gekennzeichnet ist:

N10 von 75 bis 55;
N20 von 45 bis 28;
N35 von 10 bis 4.

15. Essbare Emulsion nach irgendeinem der Ansprüche 11 bis 14, wobei die Emulsion eine flüssige Margarine, eine harte Margarine oder ein Aufstrich ist, bevorzugter ein Aufstrich und noch mehr bevorzugt ein fettarmer Aufstrich umfassend 10 bis 40 Gew.-% Gesamtfett.

**Revendications**

1. Poudre de graisse comprenant une graisse à l'état durci co-cristallisée avec au moins un émulsionnant,

• dans laquelle ledit émulsionnant présente une valeur HLB de 8 ou inférieure et comprend au moins 60 % en masse, rapporté à la masse totale de l'émulsionnant, de

o mono- ou diglycérides ou combinaison de ceux-ci, présentant des acides gras saturés avec une longueur de chaîne carbonée d'au moins 12 ; et

• dans laquelle ladite graisse à l'état durci est **caractérisée par** le profil de graisse solide suivant:

N10 de 90 à 40 ;
N20 de 85 à 20 ;
N35 de 25 à 2 ; et

dans laquelle le rapport massique de ladite graisse à l'état durci audit émulsionnant est de 1:0,010 à 1:0,5, et dans laquelle la poudre de graisse comprend, rapporté à la masse de graisse à l'état durci totale comprise par la poudre de graisse, au moins 75 % en masse d'une ou plusieurs graisses naturelles.

2. Poudre de graisse selon la revendication 1, comprenant au moins 60 % en masse, encore mieux au moins 75 % en masse, bien mieux encore au moins 90 % en masse, particulièrement de préférence au moins 95 % en masse et particulièrement encore mieux au moins 98 % en masse de la graisse à l'état durci co-cristallisée et d'émulsionnant, rapporté à la masse totale de la poudre de graisse.

3. Poudre de graisse selon la revendication 1 ou la revendication 2, dans laquelle la poudre de graisse peut être obtenue par micronisation à l'état de fusion supercritique.

4. Poudre de graisse selon l'une quelconque des revendications 1 à 3, dans laquelle le rapport massique de graisse à l'état durci à émulsionnant comme co-cristallisé et compris par la poudre de graisse est de 1:0,015 à 1:0,4, de préférence de 1:0,05 à 1:0,25, est encore mieux de 1:0,075 à 1:0,2 et est bien mieux encore de 1:0,08 à 1:0,12.

5. Poudre de graisse selon l'une quelconque des revendications 1 à 4, dans laquelle l'émulsionnant comprend au moins 70 % en masse, encore mieux au moins 80 % en masse et bien mieux encore au moins 85 % en masse de mono- ou diglycérides ou d'une combinaison de ceux-ci, présentant des acides gras saturés avec une longueur de chaîne carbonée d'au moins 12.

6. Poudre de graisse selon l'une quelconque des revendications 1 à 5, dans laquelle la graisse à l'état durci est **caractérisée par** le profil de graisse solide suivant:

N10 de 80 à 50 ;
N20 de 60 à 25 ;
N35 de 15 à 3 ;

encore mieux la graisse à l'état durci est **caractérisée par** le profil de graisse solide suivant:

N10 de 75 à 55 ;
N20 de 45 à 28 ;
N35 de 10 à 4.

7. Poudre de graisse selon l'une quelconque des revendications 1 à 6, dans laquelle la poudre de graisse est **caractérisée par** un quotient-C d'au moins 1,15, encore mieux d'au moins 1,25, bien mieux encore d'au moins 1,35 et particulièrement de préférence d'au moins 1,45.

8. Procédé pour la fabrication d'émulsions eau-dans-huile comestibles comprenant de 10 à 85 % en masse d'une phase d'eau dispersée et de 15 à 90 % en masse de graisse totale, ledit procédé comprenant les étapes :

a. de fourniture de poudre de graisse selon l'une quelconque des revendications 1 à 7 ;
b. de fourniture d'huile liquide;
c. de fourniture d'une phase d'eau;
d. de mélange desdites poudre de graisse, huile liquide et phase d'eau pour fournir une émulsion eau-dans-huile, dans lequel la quantité de poudre de graisse est de 1 à 50 % en masse rapporté à la masse de graisse totale.

**9.** Procédé selon la revendication 8, dans lequel la poudre de graisse n'est pas soumise à des températures supérieures à 25 degrés Celsius, de préférence 20 degrés Celsius, encore mieux 15 degrés Celsius et bien encore 10 degrés Celsius.

**10.** Procédé selon la revendication 8 ou la revendication 9, dans lequel la quantité de poudre de graisse, rapporté à la masse de graisse totale, est de 1 à 35 % en masse, de préférence de 3 à 25 % en masse, encore mieux de 5 à 20 % en masse et bien mieux encore de 7 à 15 % en masse.

**11.** Emulsion eau-dans-huile comestible, pouvant être obtenue par un procédé selon l'une quelconque des revendications 8 à 10, comprenant de 10 à 85 % en masse d'une phase d'eau dispersée et de 15 à 90 % en masse de graisse totale, et comprenant de plus de 1 à 50 % en masse de poudre de graisse, rapporté à la masse de graisse totale, ladite poudre de graisse comprenant de la graisse à l'état durci co-cristallisée avec au moins un émulsionnant, dans laquelle ladite graisse à l'état durci est **caractérisée par** le profil de graisse solide suivant:

N10 de 90 à 40 ;
N20 de 85 à 20 ;
N35 de 25 à 2 ;

dans laquelle ledit émulsionnant présente une valeur HLB de 8 ou inférieure, dans laquelle ledit émulsionnant comprend au moins 60 % en masse, rapporté à la masse totale de l'émulsionnant, de

• mono- ou diglycérides ou combinaison de ceux-ci, présentant des acides gras saturés avec une longueur de chaîne carbonée d'au moins 12, et

dans laquelle le rapport de ladite graisse à l'état durci audit émulsionnant est de 1:0,010 à 1:0,5, et dans laquelle la poudre de graisse comprend, rapporté à la masse de graisse à l'état durci totale comprise par la poudre de graisse, au moins 75 % en masse d'une ou plusieurs graisses naturelles.

**12.** Emulsion comestible selon la revendication 11, dans laquelle le rapport massique de la graisse à l'état durci à l'émulsionnant est de 1:0,015 à 1:0,4, encore mieux de 1:0,05 à 1:0,25, bien mieux encore de 1:0,075 à 1:0,2 et particulièrement de préférence de 1:0,08 à 1:0,12.

**13.** Emulsion comestible selon l'une quelconque des revendications 11 à 12, dans laquelle le D3,3 de la phase d'eau dispersée est d'au plus 18, de préférence d'au plus 15 et encore mieux d'au plus 12.

**14.** Emulsion comestible, selon l'une quelconque des revendications 11 à 13, dans laquelle la graisse à l'état durci est **caractérisée par** le profil de graisse solide suivant:

N10 de 80 à 50 ;
N20 de 60 à 25 ;
N35 de 15 à 3 ;

encore mieux la graisse à l'état durci est **caractérisée par** le profil de graisse solide suivant:

N10 de 75 à 55 ;
N20 de 45 à 28 ;
N35 de 10 à 4.

**15.** Emulsion comestible selon l'une quelconque des revendications 11 à 14, dans laquelle l'émulsion est une margarine liquide, un emballage ou une pâte à tartiner, encore mieux une pâte à tartiner et bien mieux encore une pâte à tartiner à faible teneur en graisse comprenant de 10 à 40 % en masse de graisse totale.

# EP 2 869 710 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1651338 A
- WO 2010069753 A

### Non-patent literature cited in the description

- Ullmans Encyclopedia. vol. A 16, 156-158
- *J. of Supercritical Fluids,* 2007, vol. 43, 181-190
- **MARSZALL.** *Parfumerie, Kosmetik,* 1979, vol. 60, 444-448
- **ROMPP.** Chemistry Lexicon. 1983, 1750
- **FETTE.** *Seifen Anstrichmittel,* 1978, vol. 80, 180-186
- Particle formation of ductile materials using the PGSS technology with supercritical carbon dioxide. **P.MÜNÜKLÜ.** Ph.D.Thesis. 16 December 2005, 41-51